# EUROPEAN PATENT APPLICATION

(11) **EP 1 478 082 A1**
(43) Date of publication of application: **17.11.2004**
(21) Application number: 03734893.5
(22) Date of filing: 30.01.2003
(51) Int. Cl.: H02K 15/12

(54) **METHOD FOR MANUFACTURING INSULATED COIL OF ROTATING ELECTRIC MACHINE AND INSULATED COIL**

(30) Priority: 31.01.2002 JP 2002023718
(71) Applicant: Kabushiki Kaisha Toshiba, Tokyo 105-8001 (JP)
(72) Inventor: HIRAI, Hisayuki, Chiba-Shi, Chiba 267-0055 (JP); YAMADA, Toshimitsu, Yokohama-Shi, Kanagawa 245-0061 (JP); OKANO, Kimihiko, Edogawa-Ku, Tokyo 132-0021 (JP); KOYAMA, Mitsuhiko, Tokorozawa-Shi, Saitama 359-0021 (JP); HATANO, Hiroshi, Chofu-Shi, Tokyo 182-0025 (JP)
(74) Representative: HOFFMANN - EITLE
(86) International application number: PCT/JP2003/000925
(87) International publication number: WO 2003/065548

(57) **Abstract**

An insulated coil for electric rotating machinery, according to the present invention is manufactured based on a method of manufacturing the insulated coil for an electric rotating machinery, which includes the steps of taping a mica tape on a coil conductor to mold an insulating layer, impregnating the coil with resin under vacuum and pressure condition, attaching a molding jig on the coil impregnated with the resin, and then heating the resin with which the coil is impregnated, to cure the resin, thus manufacturing the insulated coil. The mica tape taping step, a heat-shrinkable tape taping step, the impregnating step under vacuum and pressure, the resin heating/curing step utilizing a liquid heating compound and a molding jig-disassembling/finishing step are carried out to manufacture the insulated coil.

## Description

### Technical Field

The present invention relates to a method for manufacturing an insulated coil for electric rotating machinery, and especially to the method for manufacturing the insulated coil for electric rotating machinery, in which there are made, in a step for impregnating a coil with thermosetting resin and curing same, improvements in curing and molding operation for insulation of the coil after the impregnating step, and also relates to such an insulated coil manufactured by the above-mentioned manufacturing method.

### Background Art

A coil to be applied to a large electric rotating machinery such as a turbine generator and a hydro generator, has conventionally been manufactured by carrying out, in an insulation process operation, a taping step of taping a mica tape, in which mica is attached to a film or a glass tape through adhesive, by a plurality of times to mold an insulating layer, and a vacuum pressure impregnation step for impregnating the insulating layer in the form of coil with thermosetting polymeric organic resin such as epoxy resin under vacuum and pressure.

In addition, the coil has been manufactured by carrying out, in the insulation process operation, a molding step of applying a pressing force to the insulating layer in the form of coil, which has already been impregnated with the resin in the vacuum pressure-impregnation step and in which the resin has still been in a liquid state, with the use of a molding jig to perform a molding process, a resin heating/curing step for placing the coil, which has been subjected to the molding step, in an air-heating oven to heat the resin with which the insulating layer has been impregnated so as to cure the resin, and a step of disassembling the molding jig after the curing step of resin, to remove such jig.

Operators have therefore been compelled to be subject to a heavy and hard work for a long period of time in hostile environments due to an offensive odor from the resin in a liquid state, in the molding step of the above-mentioned operation steps.

In the heating/curing step, the resin with which the insulating layer in the form of coil is impregnated is heated by air in the oven having a large room, thus leading to deviation in temperature distribution of the coil.

In such circumstances, there has been a demand for a newly improved operation, in the step of manufacturing the coil, to relieve the operators from the heavy work or provide a guarantee of quality in the long service life of the products.

The above-mentioned molding step and the above-mentioned resin heating/curing step involve difficulties and inconvenience in progress of operations.

More specifically, the molding step is carried out under a condition that the resin with which the insulating layer in the form of coil is impregnated is still in the liquid form and sticky. Magnitude of the pressing force, which is applied to mica tape layers of the coil by means of the molding jig, may damage the mica tape by which the attaching layer is molded. As a result, the operators have been compelled to be subject to a heavy and hard work for a long period of time when attaching the molding jig on the coil in hostile environments due to an offensive odor from the resin.

In addition, the resin tends to trickle when attaching the molding jig on the coil, so that the operators have to carry out the operation on a slippery floor, thus compelling the operators to be subject to the heavy work also in this aspect.

On the other hand, the resin heating/curing step utilizes, as a heating source, a hot air in the oven having the large room. The air has a small heat capacity. A long period of time is hence required until the temperature of the coil reaches the preset temperature.

Flow of the hot air in the oven having the large room causes differences in temperature distribution due to convection, radiation and drift, to provide a local variation in the curing state of the resin with which the insulating layer in the form of coil is impregnated, thus leading to a problem of variation in electric properties of the coil.

An object of the present invention, which was conceived in view of the aforementioned background, is to provide a method for manufacturing an insulated coil for electric rotating machinery, which provides an operator with an improved working environment and enables the resin, with which the coil is impregnated, to be cured in a shorter period of time to ensure a stable quality of the product, as well as to provide the insulated coil manufactured by the above-mentioned manufacturing method.

### Disclosure of The Invention

In order to achieve the aforementioned object, there is provided a method of manufacturing an insulated coil for an electric rotating machinery comprising the steps of: taping a mica tape on a conductor to mold a coil having an insulating layer; impregnating the coil with resin under vacuum and pressure condition; attaching a molding jig to the coil impregnated with the resin; and heating the resin with which the coil is impregnated, to cure the resin to thereby provide an insulated coil, wherein the mica tape taping step, a heat-shrinkable tape taping step, the impregnating step under vacuum and pressure condition, the resin heating/curing step utilizing a liquid heating compound and a molding jig-disassembling/finishing step are carried out to manufacture the insulated coil.

In preferred embodiments of the present invention, the resin heating/curing step may comprise a curing step of the resin with a use of either one of liquid heating compound of polyolefin material and polyethylene material. Either one of liquid heating compound of polyolefin material and polyethylene material, which is to be used at a time of curing the resin may have a melting point of less (not more) than 135°C. Either one of liquid heating compound of polyolefin material and polyethylene material, which is to be used at a time of curing the resin, may have viscosity of less (not more) than 100Pa. s at a temperature of 150°C. At least one of antioxidant and antistatic agent may be added to either one of liquid heating compound of polyolefin material and polyethylene material, which is to be used at a time of curing the resin.

In the taping step mentioned above, a curing reaction accelerator is held to the mica tape so that the curing reaction accelerator is distributed in a large amount to a side of the coil, which is close to the conductor, and also distributed in a null or small amount to a side of the coil, which is away from the conductor.

In the heat-shrinkable tape taping step mentioned above, a releasing tape is taped on an outer side of the mica tape by which the insulating layer is molded on the conductor of the coil, a pressure plate for a molding process is contacted to the releasing tape, and the heat-shrinkable tape is then taped on the pressure plate to fix the plate. Either one of a metallic plate and a fiber-reinforced lamination plate may be used as the pressure plate for a linear portion of the coil. A plastic plate may be used as the pressure plate for a curved portion of the coil. The plastic plate, which is used as the pressure plate for the curved portion of the coil, may be molded of polyamide material.

The heat-shrinkable tape is molded from any one of a thermoplastic tape, a heat-shrinkable tube and a heat-shrinkable cloth subjected to a release-agent process.

In the resin heating/curing step, a receiving pan is provided on a bottom portion of a base member supporting the coil to receive drop-down resin. The receiving pan may be provided with either one of a metallic film and a heat resistant film for the linear portion of the coil, with a heat resistant film for the curved portion of an end of the coil, and with either one of a heat resistant film and a non-woven fabric for an edge of the end of the coil.

Alternatively, the above-described object of the present invention is achieved by a method for manufacturing an insulated coil for an electric rotating machinery, comprising: a taping step for taping a mica tape on a conductor to mold an insulating layer; a heat-shrinkable tape taping step for taping and then fixing, after taping a releasing tape on an outer side of the mica tape and then bringing a pressure plate for a molding process into contact with the releasing tape, a heat-shrinkable tape on the pressure plates to hold them; a vacuum/pressure impregnating step for impregnating a coil thus taped with resin under vacuum and pressure condition; a jig attaching step for attaching a coil-molding jig on the coil impregnated with the resin; a resin heating/curing step for heating the resin, with which an insulating layer of the coil is impregnated, with a use of a liquid compound to cure the resin; and a jig-disassembling/finishing step of the jig.

In addition, according to the present invention, there is also provided an insulated coil for an electric rotating machinery, which is manufactured by a method comprising the steps of: taping a mica tape on a conductor to mold an insulating layer; taping and then fixing, after taping a releasing tape on an outer side of the mica tape and then bringing a pressure plate for a molding process into contact with the releasing tape, a heat-shrinkable tape on the pressure plate; impregnating the thus taped coil with resin under vacuum and pressure condition; attaching a coil-molding jig on the coil impregnated with the resin; heating the resin, with which an insulating layer of the coil is impregnated, to cure the resin; and disassembling the jig and finishing the manufacturing operation.

According to the present invention as described above, the insulated coil undergoes the taping step, the heat-shrinkable tape taping step, the vacuum/pressure impregnating step, the resin heating/curing step utilizing the liquid heating compound and the attachment-disassembling/finishing step to manufacture the insulated coil, without carrying out a step in which a molding jig is attached on the coil impregnated with the resin in the from of liquid, and a resin heating/curing step utilizing a hot air, both of which are carried out by the conventional technology. It is therefore possible to relieve remarkably operators from a heavy work.

In the curing step of the resin, the resin is heated using either one of polyethylene material and polyolefin material serving as the heating compound, to cure the resin, in replacement of the curing through the hot air as used conventionally. It is therefore possible to increase rapidly the temperature of the coil, thus providing a uniform temperature distribution. In addition, the curing period of time can be reduced in comparison with the conventional technology, thus improving remarkably the productivity.

The present invention provides an excellent releasability or removability, which leads to no need for operators to carry out a manual operation immediately after the resin-impregnating step. It is therefore possible to manufacture the insulated coil impregnated with resin, which has an excellent quality stability, with an improved workability under a good working environment. The manufactured coil has further improved electric characteristics.

According to the present invention, it is possible to improve moldability, releasability and workability, reduce remarkably the curing period of time, and obtain the further improved electric characteristics, thus being useful and advantageous.

### Brief Description of The Drawings

FIG. 1 is a block diagram illustrating an operation process of a method of manufacturing an insulated coil for electric rotating machinery according to an embodiment of the present invention.
FIG. 2 is a schematic descriptive view illustrating a resin heating/curing device, which is applied, when curing the resin with which the coil is impregnated, in the method of the present invention for manufacturing the insulated coil for electric rotating machinery.

### Best Mode for Embodying The Invention

A preferred embodiment of the method of manufacturing the insulated coil for electric rotating machinery, according to the present invention, will be described hereunder in detail with reference to the accompanying drawings and reference numerals added thereto.

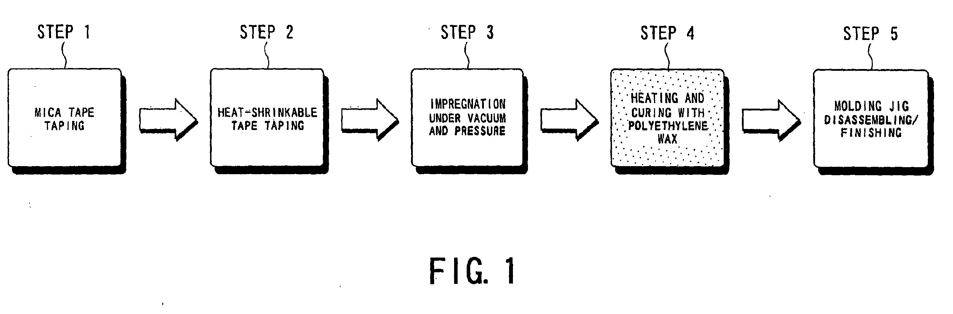

FIG. 1 is a block diagram illustrating an operation process of a method of manufacturing an insulated coil for electric rotating machinery according to an embodiment of the present invention.

The method of manufacturing an insulated coil for electric rotating machinery of the present invention includes a mica tape taping step (Step 1), a heat-shrinkable tape taping step (Step 2), a vacuum/pressure impregnating step (Step 3), a resin heating/curing (i.e., thermo-setting) step (Step 4) and a jig-disassembling/finishing step (Step 5), so as to manufacture the insulated coil through these respective steps (Steps 1 to 5).

The taping step (Step 1) is a step of taping a mica tape on a coil conductor molded of strands, which have previously been subjected to an insulating process, by means of a taping device by a plurality of times to mold an insulating layer. The mica tape is a tape, in which mica is applied to a film or a glass tape through adhesive.

The mica tape carries a curing reaction accelerator such as zinc oxide. The curing reaction accelerator is distributed, in a large amount, to a side of the coil, which is close to the conductor, but, in a null or small amount, to a side of the coil, which is away from the conductor. Such distribution is determined based on the following reasons.

The coil is subjected to a heat/pressure process utilizing a liquid heating compound such as polyolefin material or polyethylene material in the resin heating/curing step (Step 4) described later. However, the heating compound is kept in a solid state and has no fluidity at a low temperature. In view of this fact, the heating compound in a liquid state has previously been heated and melted, is received in a storage tank. When the resin with which the coil is impregnated is cured under heat and pressure, the coil is received in a pressure vessel and then, the heating compound in the form of liquid is supplied from the storage tank to the vessel to cure the resin. In this case, the heat is gradually transmitted from the outer side of the coil conductor toward the inner side thereof, thus decreasing the temperature of the heating compound. In general, the resin contracts to reduce its volume, with the result that voids or layer-separation may occur. Occurrence of voids and layer-separation leads to a phenomenon that a high partial discharge of the coil and a high dielectric loss thereof occur.

In the embodiment of the present invention with consideration given to the above-mentioned matters, when the curing reaction accelerator is added to the mica tape by which the insulating layer is molded, the curing reaction accelerator is distributed, in a large amount, to the side of the coil, which is close to the conductor, but, in a null or small amount, to the side of the coil, which is away from the conductor, thus enabling the resin to be cured gradually from the inner side of the coil toward the outer side thereof. It is therefore possible to prevent occurrence of voids due to contraction of the resin, thereby improving the electric properties.

The heat-shrinkable tape taping step (Step 2) includes a step of taping a releasing tape on the outer side of the mica tape by which the insulating layer is molded on the conductor of the coil, bringing pressure plates for a molding process into contact with the releasing tape as taped, and then taping a heat-shrinkable tape on the pressure plates to hold them.

A metallic plate or a fiber-reinforced lamination plate is used as the pressure plates for linear portions of the coil. A plastic plate is also used as the pressure plates for curved portions of the coil.

This heat-shrinkable tape taping step (Step 2) is an essential step to maintain the coil with dimensions in design and smooth the surface of the coil, thus improving the workability. In view of this fact, a polypropylene tape or a polytetra fluoroethylene tape would be preferably used as the releasing tape.

There is selected, for the pressure plate for the straight portion of the coil, material such as metallic plate or fiber-reinforced lamination plate, which has a high coefficient of elasticity by which flatness of the coil surface can be ensured.

The pressure plate for the curved portion of the end of the coil requires flexibility by which the pressure plate can be brought into close contact with the curved surface of the coil, and the plastic plate that is excellent in thermal resistance is suitably used. Such a plastic plate is molded for example of polyamide material such as nylon 6, 46 or 66, having a softening point of at least about 170°C. The polyamide material is easily conformable to the curved portion such as the end of the coil and has an appropriate hardness. The polyamide material does not react even with the resin with which the coil is impregnated and also provides an excellent releasability.

In the heat-shrinkable tape taping step (Step 2), after the pressure plates are brought into contact with the insulating layer through the releasing tape, the heat-shrinkable tape is taped to keep the pressure plates in a stationary state.

Any one of a thermoplastic tape, a heat-shrinkable tube and a heat-shrinkable cloth subjected to a release-agent process, which have a large contractile force, is selected for such heat-shrinkable tape.

The coil, which has already been impregnated with the resin under vacuum and pressure, is moved from the impregnation pressure vessel into the curing pressure vessel and exposed to air under the atmospheric pressure. In such a state, heat from the liquid heating compound is applied to the coil so that the pressing force is applied to the coil through the pressure plates during cure of the resin, leading to decrease in volume. The decrease in volume of the coil continues until the pressure of the coil is balanced with the pressure of the liquid heating compound.

In view of this fact, in the embodiment of the present invention, the heat-shrinkable tape is taped on the tape for securing the pressure plates, in order to cope with the decrease in volume during the curing of the resin. Any one of the thermoplastic tape, the heat-shrinkable tube and the heat-shrinkable cloth subjected to the release-agent process is selected for such heat-shrinkable tape.

In the embodiment of the present invention, the releasing tape is taped on the insulating layer of the coil, the pressure plates for supporting the coil are brought into contact with the outer side of the releasing tape, the heat-shrinkable tape is would on the pressure plates to hold them, and the pressing force from the pressure plates is uniformly applied to the coil, when curing the resin with which the insulating layer is impregnated, with the use of the liquid heating compound, thus coping with the decrease in volume of the resin, utilizing the heat-shrinkable tape. It is therefore possible to manufacture the coil having the appropriate dimensions and a smooth surface with a high degree of precision.

In the vacuum/pressure impregnating step (Step 3), the coil, which was molded by taping and then fixing the heat-shrinkable tape on the pressure plates in the heat-shrinkable tape taping step (Step 2), is supported on the base member and it is then placed in the impregnation pressure vessel, under keeping the vessel evacuated, and the insulating layer of the coil is thereafter impregnated with the resin and an inert gas such as nitrogen is then introduced into the vessel.

In the embodiment of the present invention, after completion of the vacuum/pressure impregnating step (Step 3), the coil is subjected to the resin heating/curing step (Step 4).

The resin heating/curing step (Step 4) includes a step of heating the resin, with which the insulating layer of the coil is impregnated, with the use of the liquid heating compound under pressure to cure the resin.

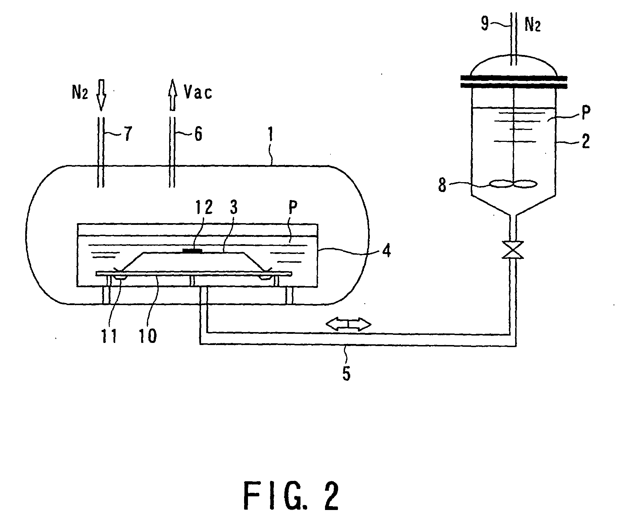

A resin heating/curing device for heating the resin, with which the insulating layer of the coil is impregnated, to cure the resin is provided with a pressure vessel 1 and a storage tank 2, as shown in FIG. 2.

A coil-receiving vessel 4, on which a support base 10 for supporting the coil 3 impregnated with the resin is mounted, is accommodated in the pressure tank 1. The liquid heating compound "P" is supplied from the storage tank 2 into the coil-receiving vessel 4 through a conduit 5.

In the pressure tank 1, which is kept in a vacuum state through a vacuum pipe 6, the receiving vessel 4 is filled up with the liquid heating compound "P" supplied from the storage tank 2, to heat the resin with which the coil 3 is impregnated, and pressure is applied by nitrogen gas supplied through a nitrogen pipe 7 to cure the resin under heat and pressure.

After completion of the curing of the resin is impregnated, the heating compound "P" is returned to the storage tank 2 through the conduit 5.

In the storage tank 2, which is filled with the liquid heating compound "P" having a high temperature, the heating compound "P" is stirred with a stirring member 8. Nitrogen gas is supplied from a nitrogen source through a nitrogen pipe 9 during the stirring operation to thereby prevent deterioration due to oxidation.

Either one of polyolefin material and polyethylene material having a melting point of not more than 135°C is selected for such liquid heating compound "P" with which the storage tank 2 is filled.

The polyolefin material or the polyethylene material, which is a thermosetting resin, has a relatively low melting point, tends to liquefy, and has insolubility to the other thermosetting resin. Such resin is available in the form of products having the different molecular weights and has suitable viscosity and fluidity at the temperature in which the resin with which the coil is impregnated is to be cured. In addition, the polyolefin material or the polyethylene material contains impurities in a small amount and also has an excellent insulating property, thus being adaptable to the molding of the coil.

For the above-mentioned reasons, wither one of the polyolefin material or the polyethylene material is used in the embodiment of the present invention.

It is preferable that the polyolefin material or the polyethylene material, which is used as the liquid heating compound "P", has viscosity of not more than 100Pa·s at a temperature of 150°C, in order to heat the resin, with which the insulating layer of the coil 3 is impregnated, to cure it in a shorter time.

This is based on the fact that the high viscosity of the liquid heating compound "P", which is supplied from the storage tank 2 to the pressure tank 1 in which the coil is received, leads to a longer transferring period of time, with the result that the curing reaction starts prior to the completion of the pressing operation, thus providing insufficient insulating property of the coil 3.

At least one of antistatic agent such as phthalocyanine agent and antioxidant such as "IRGANOX" (manufactured by Ciba-Geigy) may be added to the polyolefin material and the polyethylene material. Such an agent is added in order to ensure the heating compound having an excellent insulating property and a high electric property.

In the resin heating/curing step (Step 4), the resin with which the coil 3 is impregnated is kept in a liquid state. There is a possibility that the resin may drip to cure and then be mixed into the heating compound "P", thus causing a problem of accumulation thereof in the conduit 5 and a problem on the valve-opening or closing operation.

In view of these problems, the base member 10 is provided on the bottom thereof with a receiving pan 11 in the embodiment of the present invention.

The receiving pan 11 has a metallic film or a thermal resistant film, or a molded body of such material for the straight portion of the coil 3, a thermal resistant film for the curved portion of the end of the coil, and a thermal resistant film or a non-woven fabric for the edge of the end of the coil.

In the embodiment of the present invention, the receiving pan 11 receives the drip of the resin so as not to adversely affect the working environment.

Finally, after the completion of the curing step of the resin with which the coil 3 is impregnated, there is carried out the jig-disassembling/finishing step (Step 5), in which the pressure plates 12 and the releasing tape, which are set forth with reference to the heat-shrinkable tape taping step, is removed, as well as the attached resin, from the coil 3, and the final operation to finish the shape of the coil 3 is then conducted.

### [EXAMPLES]

Comparative Examples and Examples according to the embodiments of the present invention will be described hereunder.

### (Comparative Example)

According to a conventional method, a model coil was experimentally prepared by taping a mica tape including accelerator on a coil conductor, which was made of aluminum and had a thickness of 10mm, a width of 50mm and a length of 1300mm, and then taping a semi-conductive tape for electric field-moderation and a releasing tape on the mica tape as taped.

An iron plate having a thickness of 4mm was used, as a pressure plate, for the surface having the width of 50mm, a laminate plate was used, as a pressure plate, for the surface having the thickness of 10mm. A polypropylene tape serving as the releasing tape was taped on the pressure plates by two turns so as to be overlapped by a half width thereof to hold the plates.

Such a model coil was impregnated with resin such as epoxy resin in accordance with a vacuum pressure impregnation (VPI). A pressing force was applied to the coil with the use of a molding jig, to squeeze the resin from the impregnated mica tape layer of coil conductor. Then, the coil was received in a hot-air heating oven and kept in the maximum temperature of 150°C for a predetermined period of time under control based on a predetermined program for resin-curing temperature, to cure the resin with which the coil was impregnated.

The model coil was cooled, and then the molding jig and the pressure plates were removed from the coil. Then, the final step was applied to finish the shape of the coil.

### (Examples 1 to 3)

According to the present invention, model coils were experimentally prepared by taping mica tapes including no accelerator on coil conductors, each of which was made of aluminum and had a thickness of 10mm, a width of 50mm and a length of 1300mm, and then taping semi-conductive tapes for electric field-moderation and releasing tapes on the mica tapes as taped.

In the Example 1 of the present invention, an iron plate having a thickness of 4mm was used, as a pressure plate, for the surface having the width of 50mm, a laminate plate was used, as a pressure plate, for the surface having the thickness of 10mm. A heat-shrinkable polyester tape was taped on the pressure plates by two turns so as to be overlapped by a half width thereof to hold the plates.

In the Example 2 of the present invention, a polyester tube having a large shrinkage force, which was substituted for the heat-shrinkable tape as used in the Example 1 of the present invention, was taped on the pressure plates by two turns so as to be overlapped by a half width thereof to hold the plates.

In the Example 3 of the present invention, a cloth tape of polyester fiber subjected to a release-agent process, which was substituted for the heat-shrinkable tape as used in the Example 1 of the present invention, was taped on the pressure plates by two turns so as to be overlapped by a half width thereof to hold the plates. The above-mentioned material has an extremely large shrinkage force.

### (Example 4)

As an Example 4 of the present invention, a model coil was experimentally prepared by taping a mica tape in which a one-third portion on the inner side of the mica tape included accelerator, but the remaining two-thirds portion thereof included no accelerator, on a coil conductor, which was made of aluminum and had a thickness of 10mm, a width of 50mm and a length of 1300mm, and then taping a semi-conductive tape for electric field-moderation and a releasing tape on the mica tape as taped.

An iron plate having a thickness of 4mm was used, as a pressure plate, for the surface having the width of 50mm, a laminate plate was used, as a pressure plate, for the surface having the thickness of 10mm. A heat-shrinkable cloth tape made of polyester fiber was taped on the pressure plates by two turns so as to be overlapped by a half width thereof to hold the plates.

The model coils for the Examples. 1 to 4 according to the present invention were impregnated with resin such as epoxy resin in accordance with the vacuum pressure impregnation (VPI). The coils, in which the lower portions thereof were placed on a polyester film and stationarily supported on the base member, were received in the pressure tank. The pressure tank was kept in a closed condition, and polyethylene serving as the heating compound, which has previously been heated to a temperature of 150°C, was supplied from the storage tank to the pressure tank so as to reach a level placed above the coils by at least 10cm, and then, nitrogen gas was imcompoundtely supplied to the tank to increase the pressure therein to 0.6MPa. The coils were kept in such a state for a predetermined period of time to cure the resin with which the coils were impregnated.

After the completion of the curing step of the resin with which the coils were impregnated, the polyethylene serving as the heating compound was returned to the storage tank. When the temperature in the pressure tank became low, the coils were taken out of the tank. The resin squeezed out by pressure of the polyethylene serving as the heating compound was cured and stuck to the polyester film on which the coils have been placed at their lower portions.

The coils were cooled, and then, the molding jig, the pressure plates and the tapes were removed from the coils. Thereafter, the final step was performed to finish the shape of the coils.

An operation time ratio, working environmental conditions, a curing time ratio, a coil dimensional ratio (an insulator thickness ratio), a tanδ ratio (a dielectric dissipation factor ratio) and a breakdown voltage (BDV) ratio between the Comparative Example according to the conventional technology and the Examples 1 to 4 according to the present invention are shown in the following Table 1.

**TABLE 1**

| | Comparative Example | Example 1 of Present Invention | Example 2 of Present Invention | Example 3 of Present Invention | Example 4 of Present Invention |
|---|---|---|---|---|---|
| Operation time ratio | 100 | 80 | 80 | 80 | 80 |
| Working environmental conditions | rather worse | very good | very good | very good | very good |
| Curing time ratio | 100 | 50 | 50 | 50 | 50 |
| Coil dimensional ratio (insulator thickness ratio) | 100 | 103 | 100 | 98 | 98 |
| tanδ ratio | 100 | 105 | 99 | 95 | 90 |
| Breakdown voltage (BDV) ratio | 100 | 93 | 101 | 105 | 108 |

It will be observed from the Table 1 that the Examples 2 to 4 of the present invention excepting the Example 1 of the present invention are superior to the comparative Example in any one of the operation time ratio, the working environmental conditions, the curing time ratio, the coil dimensional ratio (the insulator thickness ratio), the tanδ ratio and the breakdown voltage (BDV) ratio.

### (Example 5)

A coil having the core-length of about 6 meters for an actual 18kV-class coil was prepared in an Example 5 according to the embodiment of the present invention. A mica tape in which a one-third portion on the side of the mica tape, which was close to a coil conductor, included accelerator held thereon, but the remaining portion thereof included no accelerator, was taped on the coil conductor. The same pressure plates as those in the above-described Example 1 to 4 of the present invention were used so as to be brought into contact with straight portions of the coil. A plate made of nylon 46 having a thickness of 3mm was used as the pressure plate to be brought into contact with the end of the coil.

The same heat-shrinkable tube of polyester as set forth in the description of the Example 2 of the present invention was taped on the outermost surface of the coil by two turns so as to be overlapped by a half width thereof over the entire length of the coil.

The above-mentioned coil was impregnated with resin such as epoxy resin in accordance with the vacuum pressure impregnation (VPI). The coil was taken out of the impregnation tank and then placed on the base member to cause the resin sticking on the outer surface of the coil to drip. A polyester film was placed in the form of an underlay layer on the straight portions of the coil. A polyester non-woven fabric was placed on the end of the coil. A sheet of crepe paper was placed on the edge of the end of the coil. The coil, which was supported on the base member, was received in the pressure tank. Polyethylene wax, which has previously been heated to a temperature of 150°C, was supplied to the coil-receiving vessel so as to reach a level placed above the coil by at least 10cm, and the nitrogen gas was then imcompoundtely supplied to the tank to increase the pressure therein to 0.7MPa.

After the completion of the curing step of the resin with which the coils were impregnated, the polyethylene wax that has been supplied in the form of heating compound to the coil-receiving vessel was returned to the storage tank. Then, the temperature in the pressure tank was reduced to the atmospheric pressure and the coil was cooled. Thereafter, the coil was taken out of the tank, and the pressure plates were removed from the coils. Then, the final step was carried out to finish the shape of the coil.

The end portion of the coil, which had been brought into contact with the pressure plates made of nylon, provided a smooth and clean finished surface in the same method as in the case where the iron plate was used.

The resin squeezed out when applying pressure by the nitrogen gas stuck on the polyester film serving as the underlay layer for the straight portions of the coil, the polyester non-woven fabric for the end of the coil and the sheet of crepe paper for the edge of the end of the coil, thus recognizing the effect of pressure through the polyethylene wax. The resin squeezed out was cured and then easily removed due to insolubility to the polyethylene wax.

It was recognized that the coil of the Example 5 of the present invention had the same coil-dimensions (the insulator thickness) in comparison with the products manufacture in accordance with the conventional method, but provided the tanδ ratio of 98% and enabled the manufacturing period of time from the completion of the resin impregnation step to the completion of the curing step to reduce by 50%, thus providing an excellent productivity.

### (Examples 6 to 11)

It is essential that the heating compound, which is received in the coil-receiving vessel to be supplied to the coil, has insolubility to the thermosetting resin, and is kept in a solid state at a room temperature, but in a liquid state at the curing temperature of the resin. Polyethylene material, polyolefin material and polypropylene material are excellent in insolubility. The polypropylene material of these materials was excluded due to its high melting point. Based on the above conditions, Examples 6 to 11 were prepared in accordance with the present invention.

An investigation of the polyethylene material and the polyolefin material was conducted in penetration rate thereof into the insulating layer of the mica tape, releasability and workability thereof. The results are shown in the following Table 2.

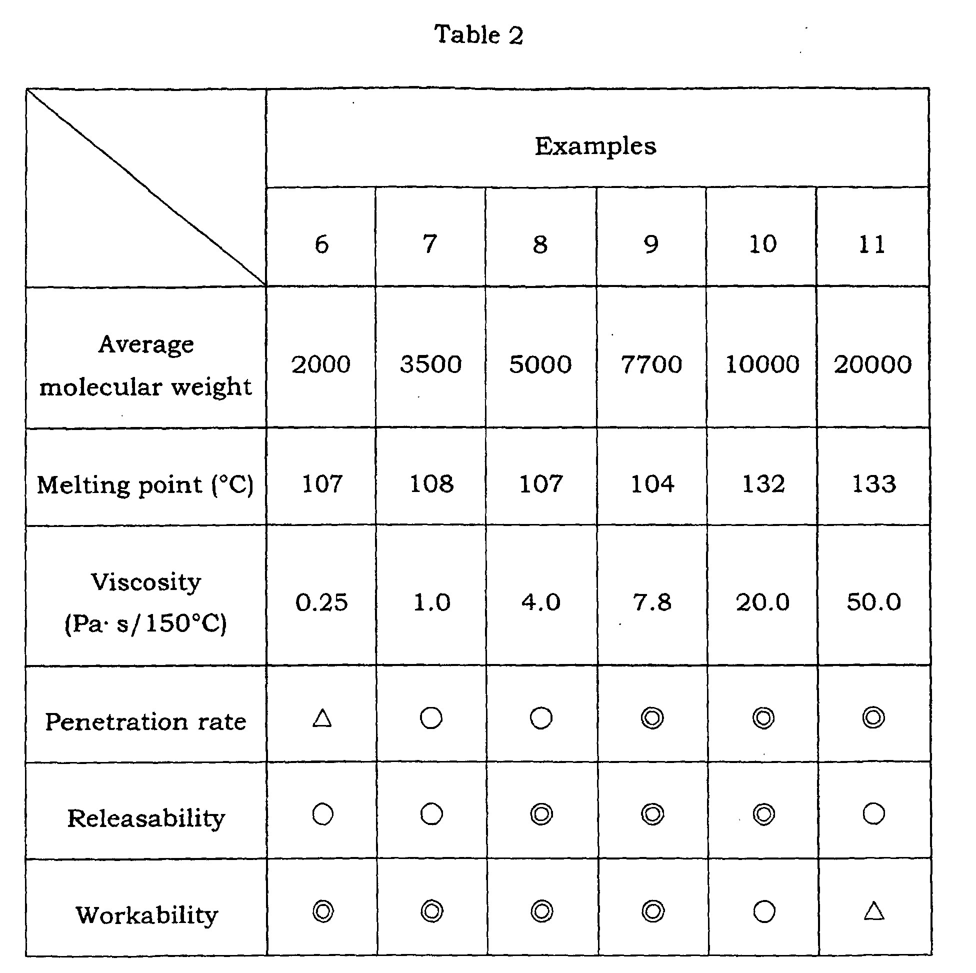

The penetration rate shows a degree of penetration of the heating compound into the mica tape and the releasing tape, the releasability shows a coming-off property of a film molded on the surface of the coil and the workability shows moldability of the fluid flowing in the conduit.

The symbol "Δ" indicates "rather worse", the symbol "○" indicates "good" and the symbol "ⓞ" indicates "excellent".

It is recognized from the results in Table 2 that use of either one of the polyolefin material and the polyethylene material provides excellent results in any one of the penetration rate, the releasability and the workability.

### Industrial Applicability

According to the present invention as described above, the insulated coil undergoes the taping step, the heat-shrinkable tape taping step, the vacuum/pressure impregnating step, the resin heating/curing step utilizing the liquid heating compound and the jig-disassembling/finishing step to manufacture the insulated coil, without carrying out a step in which a molding jig is attached on the coil impregnated with the resin in the from of liquid, and a resin heating/curing step utilizing a hot air, both of which are carried out in the conventional prior art. It is therefore possible to remarkably relieve operators from heavy and severe work, thus providing a high industrial applicability. It is possible to increase rapidly the temperature of the coil, thus providing a uniform temperature distribution. In addition, the curing period of time can be reduced in comparison with the conventional technology, thus remarkably improving the productivity. The manufactured coil has further improved electric characteristics and widely extending range of use.

## Claims

1. A method of manufacturing an insulated coil for an electric rotating machinery, comprising the steps of:
taping a mica tape on a conductor to mold a coil having an insulating layer;
impregnating the coil with resin under vacuum and pressure condition;
attaching a molding jig to the coil impregnated with the resin; and
heating the resin with which the coil is impregnated, to cure the resin to thereby provide an insulated coil,
wherein the mica tape taping step, a heat-shrinkable tape taping step, the impregnating step under vacuum and pressure condition, the resin heating/curing step utilizing a liquid heating compound and a molding jig-disassembling/finishing step are carried out to manufacture the insulated coil.

2. A method of manufacturing an insulated coil for an electric rotating machinery according to claim 1, wherein said resin heating/curing step comprises a curing step of the resin with a use of either one of liquid heating compound of polyolefin material and polyethylene material.

3. A method of manufacturing an insulated coil for an electric rotating machinery according to claim 2, wherein either one of liquid heating compound of polyolefin material and polyethylene material, which is to be used at a time of curing the resin, has a melting point of not more than 135°C.

4. A method of manufacturing an insulated coil for an electric rotating machinery according to claim 2, wherein either one of liquid heating compound of polyolefin material and polyethylene material, which is to be used at a time of curing the resin, has a viscosity of not more than 100Pa· s at a temperature of 150°C.

5. A method of manufacturing an insulated coil for an electric rotating machinery according to claim 2, wherein at least one of antioxidant and antistatic agent is added to either one of liquid heating compound of polyolefin material and polyethylene material, which is to be used at a time of curing the resin.

6. A method of manufacturing an insulated coil for an electric rotating machinery according to claim 1, wherein in the taping step, a curing reaction accelerator is held to the mica tape so that the curing reaction accelerator agent is distributed in a large amount to a side of the coil, which is close to the conductor, and also distributed in a null or small amount to a side of the coil, which is away from the conductor.

7. A method of manufacturing an insulated coil for an electric rotating machinery according to claim 1, wherein in the heat-shrinkable tape taping step, a releasing tape is taped on an outer side of the mica tape by which the insulating layer is molded on the conductor of the coil, pressure plates for a molding process are contacted to the releasing tape, and the heat-shrinkable tape is taped on the pressure plates to fix the plates.

8. A method of manufacturing an insulated coil for an electric rotating machinery according to claim 7, wherein either one of a metallic plate and a fiber-reinforced lamination plate is used as the pressure plates for a straight portion of the coil.

9. A method of manufacturing an insulated coil for an electric rotating machinery according to claim 7, wherein a plastic plate is used as the pressure plates for a curved portion of the coil.

10. A method of manufacturing an insulated coil for an electric rotating machinery according to claim 9, wherein said plastic plate is molded of polyamide material.

11. A method of manufacturing an insulated coil for an electric rotating machinery according to claim 7, wherein said heat-shrinkable tape is molded of any one of a thermoplastic tape, a heat-shrinkable tube and a heat-shrinkable cloth subjected to a release-agent process.

12. A method of manufacturing an insulated coil for an electric rotating machinery according to claim 1, wherein, in the resin heating/curing step, a receiving pan is provided on a bottom portion of a base member supporting the coil to receive drop-down resin.

13. A method of manufacturing an insulated coil for an electric rotating machinery according to claim 12, wherein said receiving pan is provided with either one of a metallic film and a heat resistant film for a linear portion of the coil, with a heat resistant film for a curved portion of an end of the coil, and with either one of a heat resistant film and a non-woven fabric for an edge of the end of the coil.

14. A method of manufacturing an insulated coil for an electric rotating machinery, which comprises:
a taping step for taping a mica tape on a conductor to mold a coil insulating layer;
a heat-shrinkable tape taping step for taping and then fixing, after taping a releasing tape on an outer side of the mica tape and then bringing a pressure plate for a molding process into contact with the releasing tape, a heat-shrinkable tape on the pressure plate to hold them;
a vacuum/pressure impregnating step for impregnating a coil thus would with resin under vacuum and pressure condition;
a jig attaching step for attaching a coil-molding jig on the coil impregnated with the resin;
a resin heating/curing step for heating the resin, with which an insulating layer of the coil is impregnated, with a use of a liquid compound to cure the resin; and
a jig-disassembling/finishing step of the jig.

15. An insulated coil **characterized by** a manufacturing method comprising the steps of: taping a mica tape on a conductor to mold a coil-conductor insulating layer; taping and then fixing, after taping a releasing tape on an outer side of the mica tape and then bringing a pressure plate for a molding process into contact with the releasing tape, a heat-shrinkable tape on the pressure plate; impregnating a thus taped coil with a resin under vacuum and pressure condition; attaching a coil-molding jig on the coil impregnated with the resin; heating the resin, with which an insulating layer of the coil is impregnated, to cure the resin; and disassembling the jig and finishing the manufacturing operation.
